(19) Europäisches Patentamt / European Patent Office / Office européen des brevets

(11) **EP 1 926 303 A1**

(12) **EUROPEAN PATENT APPLICATION**

(43) Date of publication:
**28.05.2008 Bulletin 2008/22**

(51) Int Cl.:
*H04N 1/407* (2006.01)    *H04N 1/401* (2006.01)

(21) Application number: **07114876.1**

(22) Date of filing: **23.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.11.2006 KR 20060116099**

(71) Applicant: **Samsung Electronics Co., Ltd.
Suwon-si,
Gyeonggi-do 442-742 (KR)**

(72) Inventor: **Kim, Kyeong-man
Yongin-sin (KR)**

(74) Representative: **Waddington, Richard
Appleyard Lees,
15 Clare Road
Halifax HX1 2HY (GB)**

(54) **Image forming apparatus and method**

(57)    An image forming apparatus includes an image sensing part (120) that generates image data of a document placed on a scanning plane, a shading correcting part (132) that performs shading correction on the generated image data, a gamma correcting part (134) that corrects the shading-corrected image data according to a gamma curve, and a controller (150) that controls the gamma correcting part (134) to modify the gamma curve in accordance with background information of the gamma-corrected image data. With this configuration, deterioration of image quality which may occur due to nonuniformity of a mechanism, such as a scanner, can be ameliorated.

FIG. 1

EP 1 926 303 A1

**Description**

BACKGROUND OF THE INVENTION

Field of the Invention

The present invention relates to image forming, and more particularly, to an image forming apparatus and an image forming method, which are capable of compensating deterioration of image quality caused by mechanism non-uniformity.

Description of the Related Art

Typically, an image forming apparatus, such as a scanner, a copying machine, a facsimile machine, a digital multifunction copier, or the like, includes a scanning unit that scans a document placed on a scanning plane to generate image data corresponding to the scanned document.

The scanning unit applies light from a light source to the document and converts the light reflected from the document into an electrical signal, that is, an image signal, by means of an image sensor. At that time, the image signal may be deteriorated due to a variation of the light source or non-uniformity of light intensity, which results in what is referred to herein as a "shading effect." The shading effect may cause a generated image to appear different than the actual image of the document. Accordingly, there is a need to correct the shading effect included in the image data generated when the document is scanned.

According to a typical shading correcting method, a white reference plane such as a white sheet or a white bar is scanned immediately before a document is scanned, and a reference value to compensate generated image data is calculated. This calculated reference value is also referred to as reference shading data. Thereafter, shading compensation is made through compensation of black or white pixel values of the generated image data by comparison with the reference shading data.

The shading-compensated image data is nonlinear digital image data, and accordingly, this nonlinear digital image data is inversely compensated using a gamma curve to produce gamma-corrected linear image data.

However, such a shading correction method is only used to correct black and white levels of the image sensor and does not take into consideration other variations in the scanner mechanism. Accordingly, if a cover used to cut off external light is not mechanically uniform when a document is actually scanned, the external light is introduced into the inside of the scanning unit, which may result in deteriorated image data with horizontal or vertical non-uniformity. Accordingly, the background of the image data becomes dark, which results in deterioration of image quality scanned from a colored image in a white region, that is, a region with no print object in the document. The prevention of such image quality deterioration requires a finer molding technique and a lot of costs and time.

SUMMARY OF THE INVENTION

The invention provides an image forming apparatus and an image forming method, which are capable of easily compensating a background of image data without deterioration of image quality.

The invention provides an image forming apparatus and an image forming method, which are capable of compensating deterioration of image quality which may occur due to mechanism non-uniformity.

Additional aspects and utilities of the present general inventive concept will be set forth in part in the description which follows and, in part, will be obvious from the description, or may be learned by practice of the present general inventive concept.

According to the present invention there is provided an apparatus and method as set forth in the appended claims. Other features of the invention will be apparent from the dependent claims, and the description which follows.

According to an aspect of the present invention there is provided an image forming apparatus comprising an image sensing part that generates image data of a document placed on a scanning plane, a shading correcting part that performs shading correction on the generated image data, a gamma correcting part that corrects the shading-corrected image data according to a gamma curve, and a controller that controls the gamma correcting part to modify the gamma curve using background information of the gamma-corrected image data.

The gamma correcting part may divide the shading-corrected image data into a plurality of regions and may correct the shading-corrected image data according to gamma curves for the respective regions.

The image sensing part may comprise a plurality of image sensors, and the shading correcting part may perform the shading correction on the generated image data of the regions corresponding to the respective image sensors.

The gamma correcting part may correct the shading-corrected image data according to a gamma curve of each region corresponding to of the respective image sensors.

The controller may control the gamma correcting part to modify the gamma curve of each region using background information of the gamma-corrected image data.

The controller may calculate an average value of each region of the gamma-corrected image data obtained by scanning a white image and may control the gamma correcting part to modify the gamma curve of each region using the calculated average value.

The shading correcting part may perform the shading correction to the generated image data according to the following equation.

$$f(x) = 2^n \, \frac{x - Ki}{Wi - Ki}$$

where, $f(x)$ represents the shading-corrected image data, $x$ represents a data value of the generated image data, $Ki$ represents the minimum value of the generated image data, $Wi$ represents the maximum value of the generated image data, and $n$ represents a number of output bits.

The gamma curve may be modified according to the following equation.

$$g(x) = \begin{cases} 255 & x \geq Bt \\ 255 \dfrac{f^{-1}(x)}{x} & x < Bt \end{cases}$$

where, $g(x)$ represents the modified gamma curve, $x$ represents the data value of the generated image data, $f^{-1}(x)$ represents an inverse function of $f(x)$, and $Bt$ represents an average value of each region of the gamma-corrected image data.

The image forming apparatus may further comprise an image emphasizing part that emphasizes sharpness of the image data gamma-corrected according to the modified gamma curve.

The image emphasizing part may comprise a digital finite impulse response (FIR) filter.

The image sensing part may comprise one of a CMOS contact image sensor (CIS) and a charge-coupled device (CCD).

According to another aspect of the present invention there is provided an image forming method comprising generating image data of a document placed on a scanning plane, performing shading correction on the generated image data, correcting the shading-corrected image data according to a gamma curve, and modifying the gamma curve using background information of the gamma-corrected image data.

According to another aspect of the present invention there is provided an apparatus to form an image, the apparatus comprising an image sensor to generate image data from light incident thereon, a mechanism to retain an object in a plane so as to provide the light incident on the image sensor, the mechanism producing a background data response characteristic in the image sensor, and an image processor to compensate the generated image data through nonlinear correction data that linearizes an image response of the image sensor from the background data response characteristic of the image sensor.

According to another aspect of the present invention there is provided a method of forming an image, the method comprising generating nonlinear correction data corresponding to characteristics of an image data acquiring device, acquiring a response to background data from the image data acquiring device, modifying the nonlinear correction data to provide a corrected value of the background data for values of image data greater than a threshold value determined from the response to the background data, and applying the modified nonlinear correction data to the image data to produce the image.

According to another aspect of the present invention there is provided an apparatus to form an image, the apparatus comprising an array of image sensors to generate image data from light incident thereon, a mechanism to retain an object in a plane so as to provide the light incident on the array, the mechanism inducing in each image sensor in the array a corresponding background data response, and an image processor to compensate the generated image data through nonlinear correction data that linearizes an image response at least one of the image sensors from the background data response characteristic of the at least one of the image sensors in the array.

According to another aspect of the present invention there is provided an image processor comprising a storage part to store image data and nonlinear correction data, an image processing part to receive background data of the image data and modifying the nonlinear correction data to produce corrected background data for shaded background data as determined from the received background data, the image processor to subsequently apply the modified nonlinear correction data to the image data.

According to another aspect of the present invention there is provided an image forming apparatus comprising a mechanism to maintain a spatial arrangement between a document and a scanning plane, an image sensing part to illuminate the document and to generate image data responsive to light reflected from the document, the image data including shading resulting from illuminating the document in a spatial arrangement other than that maintained by the mechanism, and an image processing part to apply nonlinear correction data to the image data, the image processing part generating the nonlinear correction data from characteristics of the shading as determined from background image data and other nonlinear correction data applied to the background image data prior to the characteristics of the shading being obtained.

According to another aspect of the present invention there is provided a method of ameliorating a shading effect in a scanned image including indicia of a foreground color on a background color, the method comprising determining a threshold value of a color of the scanned image corresponding to the background color exhibiting the shading effect, generating nonlinear correction data from a known response to a process to generate the scanned image as modified by at least the threshold value of the color corresponding to the background color exhibiting the shading effect, and applying the nonlinear correction data to the scanned image to ameliorate the shading effect therein.

BRIEF DESCRIPTION OF THE DRAWINGS

These and/or other aspects and utilities of the present general inventive concept will become apparent and more readily appreciated from the following description of the exemplary embodiments, taken in conjunction with the accompanying drawings, in which:

FIG. 1 is a block diagram illustrating a configuration of an image forming apparatus according to an exemplary embodiment of the present general inventive concept;

FIG. 2 is a block diagram illustrating a configuration of an image forming apparatus according to another exemplary embodiment of the present general inventive concept;

FIGS. 3A to 3C are graphical views illustrating gamma correction according to an exemplary embodiment of the present general inventive concept;

FIGS. 4A and 4B are graphical views illustrating modification of a gamma curve according to an exemplary embodiment of the present general inventive concept; and

FIG. 5 is a flow chart illustrating an image forming method according to an exemplary embodiment of the present general inventive concept.

DETAILED DESCRIPTION OF THE PREFERRED EMBODIMENTS

Reference will now be made in detail to the embodiments of the present general inventive concept, examples of which are illustrated in the accompanying drawings. The embodiments are described below so as to explain the present general inventive concept by referring to the figures.

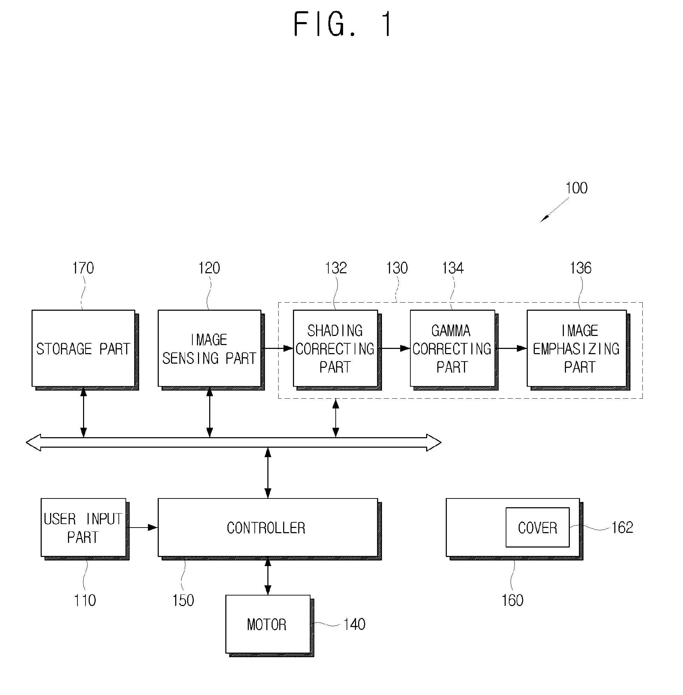

FIG. 1 is a block diagram illustrating a configuration of an image forming apparatus according to an exemplary embodiment of the present general inventive concept.

As illustrated in FIG. 1, a scanner 100 as an image forming apparatus comprises a user input part 110, an image sensing part 120, an image processing part 130, a motor 140, a controller 150, a mechanism 160 to retain a document on a scanning plane during the scanning operation to generate image data, and a storage part 170. It is to be understood that although the functional compartmentalization of FIG. 1 facilitates an understanding of the present general inventive concept through descriptions of the components of the illustrated exemplary embodiment, such configuration is not essential to practice the present general inventive concept. Elements other than those shown and described may be substituted therefor, functionality portrayed as carried out in multiple elements may be combined into a single component, and elements described as discrete may be distributed across multiple components. Indeed, numerous variations, alternatives and modifications will become apparent to the skilled artisan upon review of this disclosure and the present general inventive concept is intended to encompass such alternative configurations.

As used herein, the term "document" is intended to mean an object having indicia of a foreground color on a medium of a background color. Numerous objects that conform to such specifications will be apparent to the skilled artisan, but for purposes of description and not limitation, the present general inventive concept will be described in terms of a black-on-white image, such as is commonly referred to as a document. However, the term "image" may be used interchangeably with the term "document" without implying a difference between the objects, but the use of such interchangeable terms is intended to imply a broad range of objects as being usable with the present general inventive concept.

The exemplary mechanism 160 refers to a structure in which the scanning plane resides, where the scanning plane is a surface on which the document to be scanned is placed. The mechanism 160 may include a cover 162 to isolate the scanning plane from exterior light. The exemplary motor 140 moves the image sensing part 120 under control of the controller 150 along a scanning direction, e.g., right to left or front to rear, relative to the stationary document on the scanning plane. The exemplary user input part 110 receives an instruction from a user and transmits the received instruction to the controller 150, and the controller 150 controls the image sensing part 120 and the motor 140 according to the user's instruction provided through the user input part 110.

The present general inventive concept may include as a component of mechanism 160 an automatic document feeder to transport the document across the image sensing part 120, as opposed to other embodiments that translate the image sensing part 120 across the document. Alternatively, the automatic document feeder may transport the document onto the scanning plane where the image sensing part 120 is then moved across the stationary document on the scanning plane. Indeed, the present general inventive concept may be applied to numerous alternative scanning mechanisms, as will be apparent to the skilled artisan. The mechanism 160, regardless of its implementation, may have portions thereof that do not fix the document on the scanning plane in a manner to illuminate the document evenly throughout the entire scanning operation. The present general inventive concept compensates errors in the image data obtained under such conditions regardless of the implementation details of the mechanism from which the errors originate.

The exemplary image sensing part 120 irradiates the document placed on the scanning plane with, for example, white light, receives the light reflected from the document in an optical sensor, such as a CMOS contact image sensor (CIS) or a charge coupled device (CCD), converts the received light into an analog image signal, and converts the analog image signal into a digital image signal by means of an A/D converter to generate digital image data. The image sensor of the image sensing part 120 may have high resolution of 600dpi or 1200dpi and may include a linear array of image sensor modules aligned across the width (or alternatively the length) of the scanning plane, each image sensor module receiving light from a designated portion of the document as the array of image sensor modules is translated across the scanning plane.

The exemplary storage part 170 provides storage for image data from the image sensing part 120, as well as during image processing operations, such as those described below. Additionally, in certain embodiments of the present general inventive concept, the storage part 170 may store processor instructions that are executed by one or more processors in the scanner 100 to implement functionality thereof, such as that described below. As such, the storage part 170 may be a combination of persistent storage, such as by read-only memory (ROM), flash memory, magnetic or optical storage devices, and others, and volatile memory, such as random-access memory (RAM), and others. It is to be understood, also, that although the storage part 170 is illustrated as a discrete element in FIG. 1, the storage part 170 may be distributed among multiple devices, including as an element in the other components illustrated. For purposes of description, and not limitation, storage part 170 will be discussed below as if it were a discrete element, and, as used herein, the term "storage part 170," or, alternatively "memory 170," is intended to refer to the combined storage capability of the scanner 100, to include temporal storage, such as by pipelining and delay lines.

The exemplary image processing part 130 compensates the generated image data with respect to characteristics of the image sensing part 120 and the mechanism 160 to improve image quality, such as to improve image contrast. The image processing part 130 may include a shading correcting part 132, a gamma correcting part 134 and an image emphasizing part 136. The image processing part 130 may implemented in hardware, software or a combination of both. For example, the image processing part 130 may be a digital signal processor executing processor instruction codes retained in memory 170 to realize the functional components thereof, e.g., the shading correcting part 132, the gamma correcting part 134, and the image emphasizing part 136. Alternatively, the image processing part 130 may be implemented in an application specific circuit, or may be implemented on a processor executing processor instructions of other functional modules, such as the controller 150. Numerous alternatives and variations of the image processing part 130 may be realized without deviating from the spirit and intended scope of the present general inventive concept.

The exemplary shading correcting part 132 performs compensation of image quality deterioration that may occur while the light received in the CIS or CCD sensor is converted into the analog image signal and the digital image data is generated from the analog image signal through the A/D converter.

In the exemplary shading compensation, the image sensor first irradiates a white bar located in the scanner 100 with light and receives the light reflected from the white bar. Based on the received light, a white level $Wi$ is obtained for the image sensor at location $i$ in the array, and a shading profile generated from the response of all unit image sensors across the array is stored, such as in memory 170. The stored shading profile may be used as a reference value in compensation when the document is scanned.

The shading correction may be applied according to, for example, the following equation (1).

$$[\text{Equation } 1]$$
$$f(x) = 2^n \frac{x - Ki}{Wi - Ki}$$

where $x$ represents a data value of the generated image, $Ki$ represents a black level at image sensor $i$, and may represent the minimum value of the generated image data, $Wi$ represents a white level at image sensor $i$, and may represent the maximum value of generated image data, $i$ represents a position of an image sensor in the array, and $n$ represents a number of bits in an output value of the shading compensation. For example, in certain embodiments of the present general inventive concept, the number of bits used in the shading compensation is 16, or in other embodiments, the number of bits is 10.

In certain embodiments of the present general inventive concept, the values $Wi$ and $Ki$ are taken from reference profiles, such from light reflected from the white bar described above to obtain $Wi$ for each image sensor and a black standard from, for example, a standard color chart, to obtain $Ki$. The shading correction function given in equation (1) establishes where an image data value x falls in the range ($Wi - Ki$) when adjusted for any nonzero black offset. The result is then scaled to increase the dynamic range in the shading-corrected image data. It is to be understood that the mathematical relationship of equation (1) is descriptive of possible processes that would be executed by the hardware, software or both implementing the shading correcting part 132. Other operations that achieve conceptually similar objectives may be used with the present general inventive concept without deviating from the spirit and intended scope thereof.

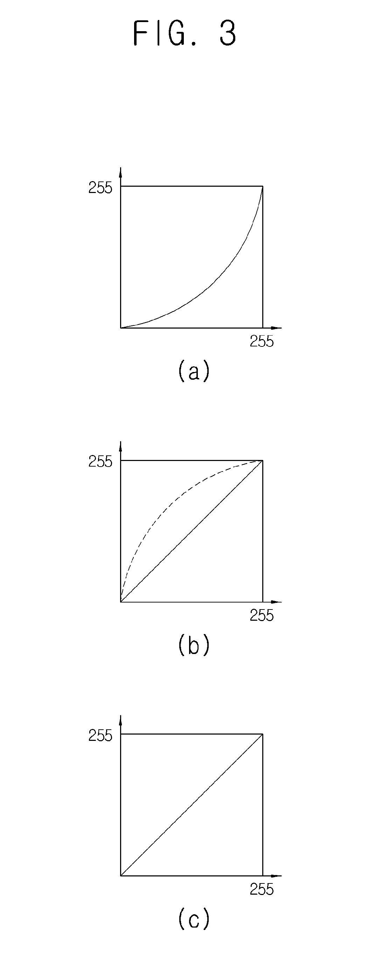

The exemplary gamma correcting part 134 compensates the shading corrected image data of its nonlinearities using, for example, stored data corresponding to a gamma curve. The gamma curve may be generated by comparing image characteristics from a scanned standard color chart, such as a grayscale color chart, with the known values of the colors in the chart. This procedure may be performed periodically, such as through user initiation of a calibration procedure through the user input part 110. In certain embodiments of the present general inventive concept, the scanned data from the chart has the above-described shading correction processes applied thereto. Consequently, after performing the shading compensation, the digital image data are nonlinear with respect to their corresponding actual values, as illustrated in FIG. 3A. In FIG. 3A, the image data are exemplified by 8-bit data taking on values between 0 and 255. By applying an inverse function of the nonlinear relationship to the nonlinear image data as illustrated in FIG. 3B, a linear relationship is output, as illustrated in FIG. 3C. The gamma correcting part 134 may store a suitable structure, such as a lookup table, in storage part 170, in which values of the gamma curve may be retrieved. In certain embodiments of the present general inventive concept, the gamma correcting part 134 may divide the shading corrected image data into a plurality of regions and maintain a gamma curve corresponding to each of the regions.

The exemplary image emphasizing part 136 compensates a signal error, which may occur when a difference exists between a frequency response of the image sensing part 120 and spatial frequency distribution of the scanned document. The image emphasizing part 136 emphasizes sharpness of an image using, for example, a digital finite impulse response (FIR) filter. It is to be understood that the present general inventive concept is not limited to the filter implementation utilized by the image emphasizing part 136. For example, the filter may be static with respect to the image data or may be a dynamic structure to adaptively emphasize certain features in the image data.

The exemplary controller 150 controls the gamma correcting part 134 to modify the gamma curve using background information of the image data that has been gamma-corrected by the gamma correcting part 134. Specifically, the controller 150 calculates an average value of the background information, which is fed back from the gamma correcting part 134 or, in certain embodiments of the present general inventive concept, from the image emphasizing part 136, and controls the gamma correcting part 134 to modify the gamma curve data using the calculated average value. The background information may be obtained from scanning a reference page of only the background color, such as a white reference page, which is subjected to the mechanism, e.g., covered with the cover 162 or provided to the automatic document feeder. The scanned white page data may be obtained after the shading correction by the shading correcting part 132 and the calculation of the gamma curve by the gamma correcting part 134. Subsequently, the background information of a scanned image may be assigned an average value, or may be assigned the value corresponding to the background color. The controller 150 may control the gamma correcting part 134 to assign the average value or the maximum value of 255 in the gamma curve data so as to output an output value of 255 when the image data are greater than or equal to the average value of the background image data. The gamma curve may be modified according to, for example, the following equation (2).

[Equation 2]
$$g(x) = \begin{cases} 255 & x \geq Bt \\ 255\dfrac{f^{-1}(x)}{x} & x < Bt \end{cases}$$

where g(x) represents the modified gamma correction data, $x$ represents a generated image data value, $f^{1}(x)$ represents the inverse function of $f(x)$, $Bt$ represents an average value of the background reference image data of the scanner sensing region.

In certain embodiments of the present general inventive concept, the modification of the gamma curve data is performed periodically, such as by the initiation of a calibration procedure by a user command via the user input part 110. Alternatively, certain embodiments of the present general inventive concept will allow the user to initiate the gamma curve correction on a job-by-job basis. For example, when the user wishes to increase the image contrast in a particular image, embodiments of the invention will allow the user to generate data of a modified gamma curve specifically for that scanning job. Other user options with regard to the present general inventive concept will become apparent to the skilled artisan upon review of this disclosure and the scope of the present general inventive concept is intended to embrace all such options.

It is to be understood that while the exemplary documents described herein are black on white, the present general inventive concept is not limited by a particular color scheme. Application to numerous image types will become apparent to the skilled artisan upon review of this disclosure, and the present general inventive concept is intended to encompass such alternative schemes. Indeed, the present general inventive concept may be applied to multi-spectral applications, where a shading correction function and a corresponding gamma correction curve can be generated per respective colors in a color palette. To correct such gamma curve data, reference pages of a particular background color may be scanned and the processes described above may be performed on the gamma curve data corresponding to that particular color. Thus, shading effects having energy in multiple spectral bands can be ameliorated by embodiments of the present general inventive concept.

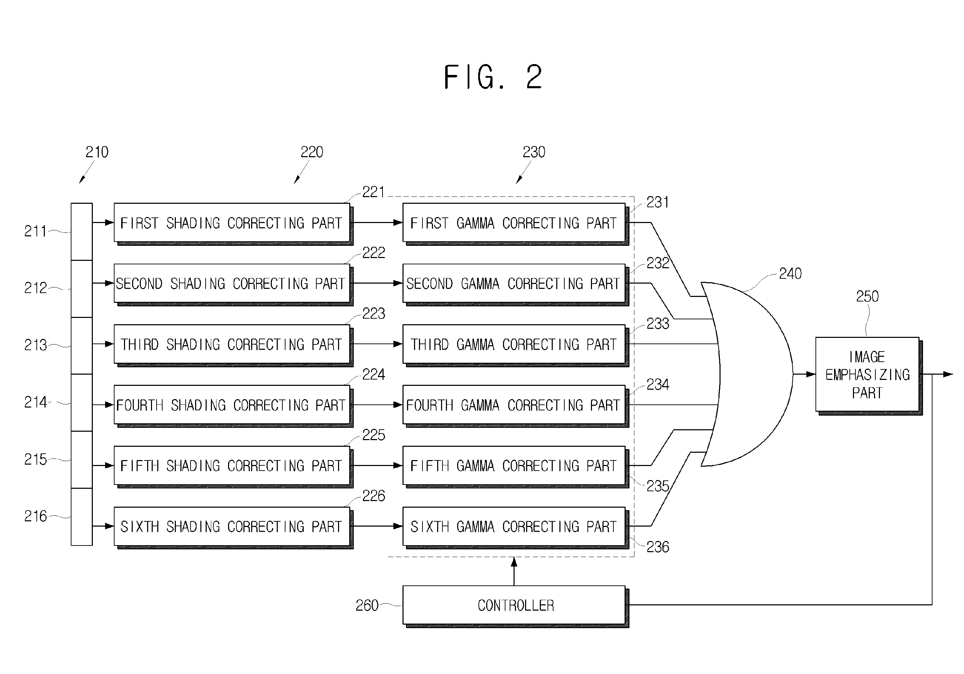

FIG. 2 is a block diagram illustrating a configuration of an image forming apparatus according to another exemplary embodiment of the present general inventive concept.

As illustrated in FIG. 2, a scanner 100 as an image forming apparatus comprises an image sensing part 210, a shading correcting part 220, a gamma correcting part 230, an image composing part 240, an image emphasizing part 250 and a controller 260 to compensate image deterioration which may occur due to mechanism non-uniformity.

The image sensing part 210 may comprise n number of image sensor chips, arranged in, for example, a linear array, to obtain scanning data from a wide document, such as, for example, A3 or A4 paper. FIG. 2 depicts, for purposes of description and not limitation, 6 image sensor chips 211 to 216, but any number of image sensor chips may be used with the present general inventive concept. The image sensor chips 211 to 216 may be constructed on different substrates, and accordingly, shading characteristics and gamma characteristics may be distributed across the image sensor chips 211 to 216 of the array. Accordingly, the exemplary shading correcting part 220 performs shading correction on image data generated in each of the image sensor chips 211 to 216 and the gamma correcting part 230 gamma-corrects the shading-corrected image data of each of the image sensor chips 211 to 216 using respective gamma curves to linearize the output image data.

The cover 162, used to isolate the scanning operation from external light, may be distorted, and accordingly, may not apply uniform pressure across the entire document. This is especially true when the cover 162 is constructed in inexpensive processes, such as by plastic molding processes. The cover 162 may become warped to the point where the amount of contact with the document at the center part thereof differs from the amount of contact at the edge part thereof. If such a distorted cover 162 is used, the amount of external light introduced into the image sensor chips 211-216 varies at the time of scanning, and the image brightness varies in accordance with the contact between portions of the cover 162 and corresponding portions of the document. In such instances, it is generally a white portion of the document that is most markedly affected.

The controller 260 may be fed back with white data, or the corresponding background color data, that contains the distortion from a difference in the amount of external light between the image sensing chips 211-216 at the time of scanning, which can then be used to compensate the background information of the scanned image. In addition, the controller 260 may direct the gamma correcting part 230 to modify the gamma curve data using the distorted background information to compensate for deterioration of a white background reference image so that such can be applied to the scanned image. In certain embodiments of the present general inventive concept, the controller 260 may evaluate the background information corresponding to a group of image sensor chips of the image sensing part 210 to decrease the processing and storage overhead.

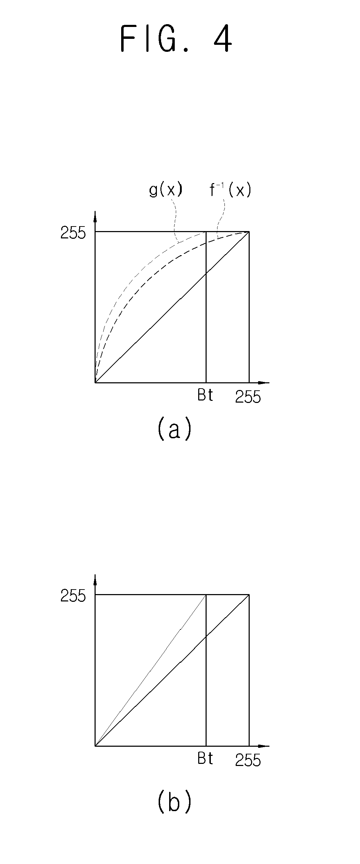

FIGS. 4A and 4B are graphical views illustrating modification of a gamma curve according to an exemplary embodiment of the present general inventive concept. Specifically, FIGS. 4A and 4B illustrate compensating image quality deterioration which may be caused by non-uniformity of the cover 162. The curves may be corrected with the background information generated to contain the shading effect from the non-uniformity of the cover 162 and subsequently modifying the gamma curves to linearize the shaded data observed in the background information. For example, if a background information value $Bt$ illustrated in FIG. 4A is 200, the image quality deterioration may be ameliorated by modifying an image data value to 255 of the background information value of 200 through the modified gamma curve. Accordingly, a linear output can be obtained as illustrated in FIG. 4B.

To illustrate further, in certain embodiments of the present general inventive concept, if a background information value generated by, for example, the sixth image sensor 216, contains anomalies caused by distortion of the cover 162, such as having a value of 200, and background information values generated by other image sensors 211 to 215 are 255, only the gamma curve of the sixth gamma correcting part 236 is modified by the background information value, and accordingly, the white levels of all image sensors 211 to 216 are set to a value of 255, thereby ameliorating the image quality deterioration.

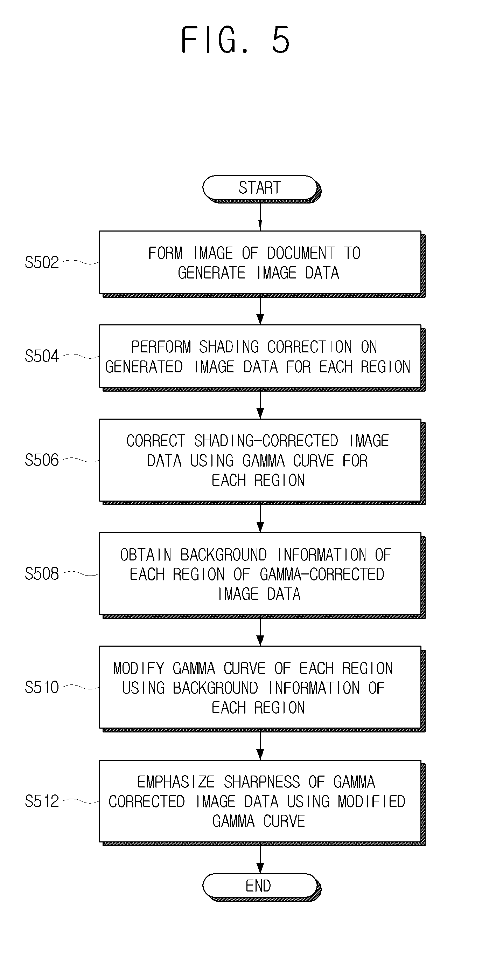

FIG. 5 is a flow chart illustrating an image forming method according to an exemplary embodiment of the present general inventive concept. The flow chart of FIG. 5 will be described in conjunction with FIGS. 1 and 2.

If a user places a document on the scanning plane, covers the document with the cover 162, and inputs a scanning instruction through the user input part 110, the controller 150 controls the motor 140 and the image sensing part 120 to form an image of the document placed on the scanning plane by generating image data at operation S502.

The shading correcting part 132 performs shading correction on the image data generated by the image sensing part 120 using a shading profile at operation S504. In certain embodiments of the present general inventive concept, as illustrated in FIG. 2, the shading correcting part 220 performs the shading correction on the generated image data of corresponding regions of the respective image sensors.

The gamma correcting part 134 performs a gamma correction on the shading-corrected image data at operation S506. In certain embodiments of the present general inventive concept, the shading-corrected image data is divided into a plurality of regions and the gamma correction is performed in each of the plurality of regions using the corresponding gamma curve data. In addition, as illustrated in FIG. 2, the gamma correcting part 230 may perform the gamma correction on the shading-corrected image data using gamma curves in each region corresponding to respective image sensors.

The controller 150 obtains the background information of the gamma-corrected image data at operation S508. The background information is obtained using an average value or the minimum value of gamma-corrected image data obtained by scanning a background reference image, such as a white reference page. If the gamma correcting part 134 performs the gamma correction on the image data of each region or performs the gamma correction corresponding to the image sensor of each region as illustrated in FIG. 2, the background information is obtained using an average value or the value of gamma-corrected image data corresponding to the background color value obtained by scanning the white image and obtaining the distortion information for each region.

The controller 150 controls the gamma correcting part 134 to modify the gamma curve using the background information or to modify the gamma curves of each of the regions using the background information of the regions at operation S510.

The image emphasizing part 136 emphasizes sharpness of the image data gamma-corrected by the modified gamma curve at operation S512.

As apparent from the above description, the present general inventive concept provides an image forming apparatus and an image forming method, which compensate for deterioration of image quality by assigning a data value to a background of a document without difficulty.

In addition, the present general inventive concept provides an image forming apparatus and an image forming method, which compensate deterioration of image quality occurring from mechanism non-uniformity.

Although a few exemplary embodiments of the present general inventive concept have been illustrated and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image forming apparatus comprising:

   an image sensing part (120) to generate image data of a document placed on a scanning plane;
   a shading correcting part (132) to perform shading correction on the generated image data;
   a gamma correcting part (134) to correct the shading-corrected image data according to a gamma curve; and
   a controller (150) to control the gamma correcting part (134) to modify the gamma curve using a background information of the gamma-corrected image data.

2. The image forming apparatus according to claim 1, wherein the gamma correcting part (134) divides the shading-corrected image data into a plurality of regions and corrects the shading-corrected image data according to gamma curves of the respective regions.

3. The image forming apparatus according to claim 1 or claim 2, wherein the image sensing part (120) comprises a plurality of image sensors (211-215), and
   wherein the shading correcting part (132) performs the shading correction on the generated image data of the regions corresponding to the respective image sensors (211-215).

4. The image forming apparatus according to claim 3, wherein the gamma correcting part (134) corrects the shading-corrected image data according to a gamma curve of each region corresponding to the respective image sensors (211-215).

5. The image forming apparatus according to any one of claims 2 to 4, wherein the controller (150) controls the gamma correcting part (134) to modify the gamma curve of each region using the background information of the gamma-corrected image data.

6. The image forming apparatus according to claim 5, wherein the controller (150) calculates an average value of each region of the gamma-corrected image data obtained by scanning a white image and controls the gamma correcting part (134) to modify the gamma curve of each region using the calculated average value.

7. The image forming apparatus according to claim 4, wherein the shading correcting part (132) performs the shading correction to the generated image data according to the following equation:

$$f(x) = 2^n \frac{x - Ki}{Wi - Ki}$$

where, $f(x)$ represents the shading-corrected image data, $x$ represents a data value of the generated image data, $Ki$ represents the minimum value of the generated image data, $Wi$ represents the maximum value of the generated image data, and $n$ represents a number of output bits.

8. The image forming apparatus according to claim 7, wherein the gamma curve is modified according to the following equation:

$$g(x) = \begin{cases} 255 & x \geq Bt \\ 255 \dfrac{f^{-1}(x)}{x} & x < Bt \end{cases}$$

where $g(x)$ represents the modified gamma curve, $x$ represents the data value of the generated image data, $f^1(x)$ represents an inverse function of $f(x)$, and Bt represents an average value of each region of the gamma-corrected image data.

9. The image forming apparatus according to claim 8, further comprising an image emphasizing part that emphasizes sharpness of the image data gamma-corrected according to the modified gamma curve.

10. The image forming apparatus according to claim 9, wherein the image emphasizing part comprises a digital finite impulse response (FIR) filter.

11. The image forming apparatus according to any preceding claim, wherein the image sensing part (120) comprises one of a CMOS contact image sensor (CIS) and a charge-coupled device (CCD).

12. An image forming method comprising:

generating image data of a document placed on a scanning plane;
performing shading correction on the generated image data;
correcting the shading-corrected image data according to a gamma curve; and
modifying the gamma curve using a background information of the gamma-corrected image data.

13. The image forming method according to claim 12, wherein the correcting the shading-corrected image data according to the gamma curve comprises dividing the shading-corrected image data into a plurality of regions and correcting the shading-corrected image data using gamma curves of the respective regions.

14. The image forming method according to claim 12, wherein the performing the shading correction comprises performing the shading correction on the generated image data of the regions corresponding to the respective image sensors (211-215).

15. The image forming method according to claim 14, wherein the correcting the shading-corrected image data using the gamma curve comprises correcting the shading-corrected image data according to a gamma curve of each region corresponding to the respective image sensors (211-215).

16. The image forming method according to claim 13, wherein the modifying the gamma curve comprises modifying the gamma curve of each region using the background information of the gamma-corrected image data.

17. The image forming method according to claim 16, wherein the modifying the gamma curve comprises calculating an average value of each region of the gamma-corrected image data obtained by scanning a white image and modifying the gamma curve of each region using the calculated average value.

18. The image forming method according to claim 15, wherein the performing the shading correction comprises performing the shading correction on the generated image data according to the following equation:

$$f(x) = 2^n \frac{x - Ki}{Wi - Ki}$$

where $f(x)$ represents the shading-corrected image data, $x$ represents a data value of the generated image data, $Ki$ represents the minimum value of the generated image data, $Wi$ represents the maximum value of the generated image data, and $n$ represents an output bit number.

19. The image forming method according to claim 18, wherein the modifying the gamma curve comprises modifying the gamma curve according to the follow-

ing equation:

$$g(x) = \begin{cases} 255 & x \geq Bt \\ 255\dfrac{f^{-1}(x)}{x} & x < Bt \end{cases}$$

where g(x) represents the modified gamma curve, x represents the data value of the generated image data, $f^{-1}(x)$ represents an inverse function of f(x), and Bt represents an average value of each region of the gamma-corrected image data.

20. The image forming method according to claim 19, further comprising emphasizing sharpness of the image data gamma-corrected according to the modified gamma curve.

21. An apparatus to form an image, comprising:

an image sensor (211) to generate image data from light incident thereon;
a mechanism to retain an object in a plane to provide the light incident on the image sensor (211), the mechanism producing a background data response characteristic in the image sensor (211); and
an image processor to compensate the generated image data through nonlinear correction data that linearizes an image response of the image sensor (211) from the background data response characteristic of the image sensor (211).

22. The apparatus according to claim 21, wherein the image processor includes a shading correcting part (132) to scale the image data by an amount corresponding to a difference between a maximum image data value and a minimum data value.

23. The apparatus according to claim 22, wherein the maximum image data value and the minimum image data value are obtained from respective reference images produced by the image sensor (211).

24. The apparatus according to any one of claims 21 to 23, wherein the image processor includes a gamma correcting part (134) to generate a first nonlinear correction data from the image data scaled by an amount corresponding to a difference between a maximum image data value and a minimum data value.

25. The apparatus according to claim 24, wherein the gamma correcting part (134) generates the nonlinear correction data from the first nonlinear correction data and the background data response characteristic.

26. The apparatus according to any one of claims 21 to 25, wherein the image processor includes an image emphasizing part to filter the generated image data of frequencies resulting from a difference between the frequency response of the combination of the image sensor (211) and the mechanism and the spatial frequency distribution of an image from which the image data is generated.

27. The apparatus according to any one of claims 21 to 26, further comprising:

a user input part;
a controller (150) in communication with the user input part to receive user directives therefrom, at least one of the user directives indicating that the image data provided to the image sensor (211) is an image from which to determine the background data response characteristic.

28. A method of forming an image, comprising:

generating nonlinear correction data corresponding to characteristics of an image data acquiring device;
obtaining a signal responsive to background data being provided to the image data acquiring device;
modifying the nonlinear correction data to provide a corrected value of the background data for values of image data greater than a threshold value determined from the background data signal; and
applying the modified nonlinear correction data to the image data to produce the image.

29. The method according to claim 28, wherein the modifying of the nonlinear correction data includes providing an upper-bound value of the background color as the corrected value thereof for values of the image data above the threshold value.

30. The method according to claim 28, further comprising applying the nonlinear correction data to the background data prior to modifying the nonlinear correction data.

31. The method according to claim 30, further comprising scaling the background data by an amount corresponding to a difference between a maximum image data value and a minimum data value prior to applying the nonlinear correction data thereto.

32. The method according to claim 31, wherein the modifying of the nonlinear correction data includes providing a value corresponding to an inverse amount by which the background data is scaled as the corrected value for values of the image data below the threshold value.

33. The method according to claim 28, further comprising scaling the image data by an amount corresponding to a difference between a maximum image data value and a minimum data value prior to applying the modified nonlinear correction data thereto.

34. An apparatus for forming an image, comprising:

an array of image sensors (211-215) to generate image data from light incident thereon;
a mechanism to retain an object in a plane so as to provide the light incident on the array, the mechanism inducing in each image sensor (211-215) in the array a corresponding background data response; and
an image processor to compensate the generated image data through nonlinear correction data that linearizes an image response of at least one of the image sensors (211-215) from the background data response characteristic of the at least one of the image sensors (211-215) in the array.

35. An image processor, comprising:

a storage part to store image data and nonlinear correction data;
an image processing part to receive background data of the image data and to modify the nonlinear correction data to produce corrected background data for shaded background data as determined from the received background data, the image processor to subsequently apply the modified nonlinear correction data to the image data.

36. An image forming apparatus, comprising:

a mechanism to maintain a spatial arrangement between a document and a scanning plane;
an image sensing part (120) to illuminate the document and to generate image data responsive to light reflected from the document, the image data including shading resulting from illuminating the document in a spatial arrangement other than that maintained by the mechanism; and
an image processing part to apply nonlinear correction data to the image data, the image processing part generating the nonlinear correction data from characteristics of the shading as determined from background image data and other nonlinear correction data applied to the background image data prior to the characteristics of the shading being obtained.

37. A method of ameliorating a shading effect in a scanned image including indicia of a foreground color on a background color, the method comprising:

determining a threshold value of a color of the scanned image corresponding to the background color exhibiting the shading effect;
generating nonlinear correction data from a known response to a process to generate the scanned image as modified by at least the threshold value of the color corresponding to the background color exhibiting the shading effect; and
applying the nonlinear correction data to the scanned image to ameliorate the shading effect therein.

# FIG. 1

100

| 170 | 120 | 132 | 130 | 134 | 136 |

```
STORAGE PART    IMAGE         SHADING      GAMMA        IMAGE
                SENSING PART   CORRECTING   CORRECTING   EMPHASIZING
                               PART         PART         PART
```

USER INPUT PART

CONTROLLER

110

150

MOTOR — 140

COVER — 162

160

# FIG. 2

FIRST SHADING CORRECTING PART — FIRST GAMMA CORRECTING PART

SECOND SHADING CORRECTING PART — SECOND GAMMA CORRECTING PART

THIRD SHADING CORRECTING PART — THIRD GAMMA CORRECTING PART

FOURTH SHADING CORRECTING PART — FOURTH GAMMA CORRECTING PART

FIFTH SHADING CORRECTING PART — FIFTH GAMMA CORRECTING PART

SIXTH SHADING CORRECTING PART — SIXTH GAMMA CORRECTING PART

IMAGE EMPHASIZING PART

CONTROLLER

EP 1 926 303 A1

# FIG. 3

(a)

(b)

(c)

# FIG. 4

(a)

(b)

# FIG. 5

```
                    ┌─────────────┐
                    │    START    │
                    └──────┬──────┘
                           │
                           ▼
        ┌──────────────────────────────────────┐
 S502   │      FORM IMAGE OF DOCUMENT TO         │
        │        GENERATE IMAGE DATA             │
        └──────────────────┬───────────────────┘
                           │
                           ▼
        ┌──────────────────────────────────────┐
 S504   │     PERFORM SHADING CORRECTION ON      │
        │  GENERATED IMAGE DATA FOR EACH REGION  │
        └──────────────────┬───────────────────┘
                           │
                           ▼
        ┌──────────────────────────────────────┐
        │    CORRECT SHADING-CORRECTED IMAGE     │
 S506   │       DATA USING GAMMA CURVE FOR       │
        │             EACH REGION                │
        └──────────────────┬───────────────────┘
                           │
                           ▼
        ┌──────────────────────────────────────┐
        │   OBTAIN BACKGROUND INFORMATION OF     │
 S508   │    EACH REGION OF GAMMA-CORRECTED      │
        │             IMAGE DATA                 │
        └──────────────────┬───────────────────┘
                           │
                           ▼
        ┌──────────────────────────────────────┐
        │  MODIFY GAMMA CURVE OF EACH REGION     │
 S510   │    USING BACKGROUND INFORMATION OF     │
        │             EACH REGION                │
        └──────────────────┬───────────────────┘
                           │
                           ▼
        ┌──────────────────────────────────────┐
        │   EMPHASIZE SHARPNESS OF GAMMA         │
 S512   │ CORRECTED IMAGE DATA USING MODIFIED    │
        │            GAMMA CURVE                  │
        └──────────────────┬───────────────────┘
                           │
                           ▼
                    ┌─────────────┐
                    │     END     │
                    └─────────────┘
```

**European Patent Office**

**EUROPEAN SEARCH REPORT**

Application Number

EP 07 11 4876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 181 444 B1 (SATO TATSUYA [JP]) 30 January 2001 (2001-01-30) * abstract; figures 2-8 * * column 5, line 50 - column 7, line 23 * ----- | 1 | INV. H04N1/407 H04N1/401 |
| X | US 4 858 023 A (TADA KAORU [JP]) 15 August 1989 (1989-08-15) * abstract; figures 1-7 * * column 3, line 41 - column 5, line 53 * ----- | 1-6 | |
| A | US 4 903 145 A (FUNADA MASAHIRO [JP]) 20 February 1990 (1990-02-20) * abstract; figures 4-7 * ----- | 2,5 | |
| A | EP 0 552 849 A (CANON KK [JP] CANON KK [US]) 28 July 1993 (1993-07-28) * abstract; figures 5,8,10,11 * ----- | 2 | |
| A | US 5 146 351 A (MAEHARA YOSHIAKI [JP]) 8 September 1992 (1992-09-08) ----- | 7 | |
| A | US 6 175 660 B1 (NABESHIMA TAKAYUKI [JP] ET AL) 16 January 2001 (2001-01-16) ----- | | TECHNICAL FIELDS SEARCHED (IPC)  H04N |
| A | EP 0 254 235 A (DAINIPPON SCREEN MFG [JP]) 27 January 1988 (1988-01-27) ----- | | |
| A | EP 1 221 810 A (XEROX CORP [US]) 10 July 2002 (2002-07-10) ----- | | |
| A | EP 0 415 722 A (CANON KK [JP]) 6 March 1991 (1991-03-06) ----- | | |

The present search report has been drawn up for all claims

| Place of search | Date of completion of the search | Examiner |
|---|---|---|
| Berlin | 14 February 2008 | Kassow, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 4876

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2008

| Patent document cited in search report | | Publication date | Patent family member(s) | | Publication date |
|---|---|---|---|---|---|
| US 6181444 | B1 | 30-01-2001 | JP | 9331453 A | 22-12-1997 |
| US 4858023 | A | 15-08-1989 | JP | 63228882 A | 22-09-1988 |
| US 4903145 | A | 20-02-1990 | US | 5075788 A | 24-12-1991 |
| EP 0552849 | A | 28-07-1993 | CA | 1316207 C | 13-04-1993 |
| | | | DE | 3853439 D1 | 04-05-1995 |
| | | | DE | 3853439 T2 | 14-09-1995 |
| | | | DE | 3856538 D1 | 26-09-2002 |
| | | | EP | 0276126 A2 | 27-07-1988 |
| | | | HK | 1009577 A1 | 21-02-2003 |
| | | | US | 5121230 A | 09-06-1992 |
| US 5146351 | A | 08-09-1992 | NONE | | |
| US 6175660 | B1 | 16-01-2001 | NONE | | |
| EP 0254235 | A | 27-01-1988 | DE | 3778602 D1 | 04-06-1992 |
| | | | US | 4807045 A | 21-02-1989 |
| EP 1221810 | A | 10-07-2002 | JP | 2002232720 A | 16-08-2002 |
| | | | US | 2002085248 A1 | 04-07-2002 |
| EP 0415722 | A | 06-03-1991 | DE | 69029295 D1 | 16-01-1997 |
| | | | DE | 69029295 T2 | 24-04-1997 |
| | | | JP | 2505889 B2 | 12-06-1996 |
| | | | JP | 3088569 A | 12-04-1991 |
| | | | US | 5095328 A | 10-03-1992 |

EPO FORM P0459

For more details about this annex : see Official Journal of the European Patent Office, No. 12/82